# FASCICULE DE BREVET EUROPEEN

(11) **EP 1 531 111 B1**
(45) Date de publication et mention de la délivrance du brevet: **14.06.2006**
(21) Numéro de dépôt: 04292427.4
(22) Date de dépôt: 13.10.2004
(51) Int. Cl.: B62D 1/184

(54) **Serrage électrique d'une colonne de direction réglable de véhicule automobile**
Elektrische Verriegelung einer einstelbaren Lenksäule für ein Kraftfahrzeug
Electric locking of an adjustable steering column for a motor vehicle

(30) Priorité: 12.11.2003 FR 0313243
(43) Date de publication de la demande: 18.05.2005
(73) Titulaire: Nacam France S.A.S., 41100 Vendome (FR)
(72) Inventeur: Laisement, André, 41290 La Chapelle Encherie (FR); Ben Rhouma, Abdel Karim, 41100 Vendome (FR); Eymery, Vincent, 41100 Vendome (FR)
(74) Mandataire: Cabinet Martinet & Lapoux

(56) Documents cités:
- EP-A- 0 350 759
- US-A- 5 188 392
- US-A- 5 927 152
- US-B1- 6 237 438

## Description

La présente invention se rapporte à un dispositif de serrage d'une colonne de direction de véhicule automobile, ladite colonne de direction étant réglable en hauteur ou en profondeur, ou étant réglable en hauteur et en profondeur. Une telle colonne est connue est connue de US-5188392.

Il existe des colonnes de direction dont la position du volant est réglable en hauteur et/ou en profondeur. La position du volant, choisie par le conducteur, est maintenue en place par un système de serrage, dont la commande manuelle est constituée par un levier de manoeuvre actionné par le conducteur.

Ces différents types de serrage actionnés par un levier présentent plusieurs inconvénients. Tout d'abord le levier ne peut être positionné qu'à proximité de l'axe de serrage, c'est-à-dire dans une zone où l'accessibilité est réduite avec une mauvaise visibilité, ce qui présente un risque de blessure par pincement des doigts. De plus, la manoeuvre de serrage et de desserrage nécessite un effort important, et est gênée par la présence des genoux du conducteur. Enfin, le levier de manoeuvre est situé dans des zones qui doivent être utilisées par d'autres fonctions afin d'avoir une bonne ergonomie du poste de conduite. Cet environnement peut être la zone des compteurs, quand l'axe de serrage est placé au voisinage ou au-dessus de l'axe de la colonne. Cet environnement peut être aussi la zone des jambes du conducteur, quand l'axe de serrage est placé en dessous de l'axe de la colonne, ce qui entraîne un risque de choc sur les genoux en cas d'accident.

Le but de la présente invention est de proposer un dispositif de serrage d'une colonne de direction réglable de véhicule automobile, qui évite les inconvénients décrits ci-dessus en ayant une commande du serrage à distance. Cette commande à distance devra utiliser un dispositif simple et peu encombrant pour permettre une grande souplesse d'adaptation, suivant le type de colonne de direction et l'environnement du poste de conduite.

Selon l'invention, le dispositif de serrage d'une colonne de direction réglable de véhicule automobile comporte un arbre de direction monté dans un tube corps et pouvant tourner autour d'un axe de direction. Ledit tube-corps est disposé dans un ensemble support fixé à la structure du véhicule, ladite colonne de direction étant réglable en hauteur et/ou en profondeur.

Le dispositif de serrage comporte :
- un actionneur électrique à mouvement rotatif ;
- un ensemble de transmission du mouvement de rotation ; et
- un système de serrage de ladite colonne.

Le dispositif de serrage est caractérisé en ce que :
- l'actionneur électrique et l'ensemble de transmission sont montés sur un support de réglage ;
- le support de réglage est raccordé à une tige de serrage, qui traverse ledit support de réglage et dont l'axe est l'axe de serrage, sensiblement perpendiculaire au plan vertical passant par l'axe de direction ;
- le support de réglage est fixé sur un élément intermédiaire, qui est constitué par un élément pivot disposé à l'avant du tube-corps, et agencé autour d'un axe monté dans l'ensemble support, ledit élément pivot pouvant tourner autour dudit axe, qui est sensiblement perpendiculaire au plan vertical.

L'ensemble de transmission comporte :
- un élément d'entrée de mouvement raccordé audit actionneur électrique, et
- un élément de sortie de mouvement raccordé audit système de serrage.

L'élément pivot est agencé et raccordé à l'ensemble support de manière à maintenir l'entraxe, entre l'élément d'entrée de mouvement et l'axe de serrage, à la même valeur lors du réglage de position de la colonne de direction.

Selon un mode de réalisation de l'invention, l'actionneur électrique est un moteur électrique. Pour l'ensemble de transmission, l'élément d'entrée de mouvement est constitué par un réducteur de vitesse entraînant une poulie de commande, et l'élément de sortie de mouvement est constitué par une poulie de serrage. Une courroie de transmission de mouvement est agencée entre la poulie de commande et la poulie de serrage.

D'après une structure particulière de l'invention, l'élément d'entrée de mouvement est un réducteur à roue et vis sans fin entraîné par le moteur électrique, la roue entraînant la poulie de commande. La courroie de transmission est une courroie crantée, qui relie une poulie de commande à crans à une poulie de serrage à crans. Le réducteur de vitesse a un carter, qui reçoit trois vis de fixation montées dans trois trous correspondants agencés sur le support de réglage, chacun de ces trois trous étant un trou oblong orienté de manière à obtenir un système de réglage de la tension de la courroie de transmission.

Selon une réalisation de l'invention particulièrement intéressante dans la fabrication en grande série de l'industrie automobile, l'ensemble support comporte deux montants sensiblement parallèles au plan vertical et le tube-corps est muni d'un carré renfort, qui est disposé entre les deux montants. La tige de serrage traverse et coulisse dans deux trous oblongs de réglage en hauteur aménagée dans les montants correspondant. La tige de serrage traverse également le carré renfort, et est munie d'une tête de serrage qui est montée dans une rainure externe du montant correspondant afin d'assurer l'immobilisation en rotation.

Le support de réglage est constitué d'un élément vertical disposé à l'extérieur de l'autre montant de l'ensemble support et d'un élément de raccordement fixé sur l'élément pivot. Le système de serrage comporte un ensemble de blocage qui est disposé entre le montant correspondant et la poulie de serrage, et qui est entraîné en rotation par ladite poulie de serrage afin d'avoir la position verrouillée et la position déverrouillée.

La tige de serrage, qui est fixe en translation par rapport à l'axe de serrage, traverse l'ensemble de blocage, et l'élément vertical. De plus, la tige de serrage a une extrémité filetée qui reçoit un écrou de tenue axiale s'appuyant contre ledit élément vertical.

Selon l'invention, plusieurs variantes de l'ensemble de blocage sont possibles. Dans une première réalisation, l'ensemble de blocage est constitué par une portion filetée, qui est aménagée sur la tige de serrage, et qui coopère avec un trou taraudé agencé dans la poulie de serrage. Une butée à aiguilles ou à billes est disposée entre la poulie de serrage et une entretoise de serrage s'appuyant contre le montant correspondant.

Dans une deuxième réalisation, l'ensemble de blocage comporte une came fixe en rotation s'appuyant sur ledit montant, et une came mobile qui est entraînée en rotation par la poulie de serrage.

Dans une troisième réalisation, l'ensemble de blocage est un système à grenouillère qui comporte une plaque fixe en rotation s'appuyant sur ledit montant, une plaque mobile qui est entraînée en rotation par la poulie de serrage, et des aiguilles qui sont disposées entre la plaque fixe et la plaque mobile.

Le dispositif de serrage selon l'invention présente ainsi l'avantage de s'adapter facilement à chaque type de colonne de direction, et à la position de la tige de serrage par rapport au volant. Le dispositif de l'invention permet en effet de choisir le meilleur emplacement, afin de respecter l'ergonomie du poste de conduite et la sécurité des genoux du conducteur en cas de choc. De plus, l'invention permet d'éviter tout effort au conducteur pour le serrage et le desserrage et tout risque de blessure lors de cette manoeuvre.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est une vue axiale en perspective du dispositif de serrage selon l'invention avec la partie haute de colonne de direction et l'ensemble support, le volant n'étant pas représenté ;
- la figure 2 est une vue en perspective suivant II de la figure 1 ;
- la figure 3 est une vue en perspective agrandie correspondant à la figure 1, le support de réglage n'étant pas représenté ;
- la figure 4 est une coupe transversale en perspective suivant le plan IV - IV de la figure 3 ;
- la figure 5 est une coupe transversale partielle suivant l'axe de serrage d'une variante de réalisation de l'ensemble de blocage ; et
- la figure 6 est une coupe transversale analogue à la figure 5 d'une autre variante de réalisation de l'ensemble de blocage.

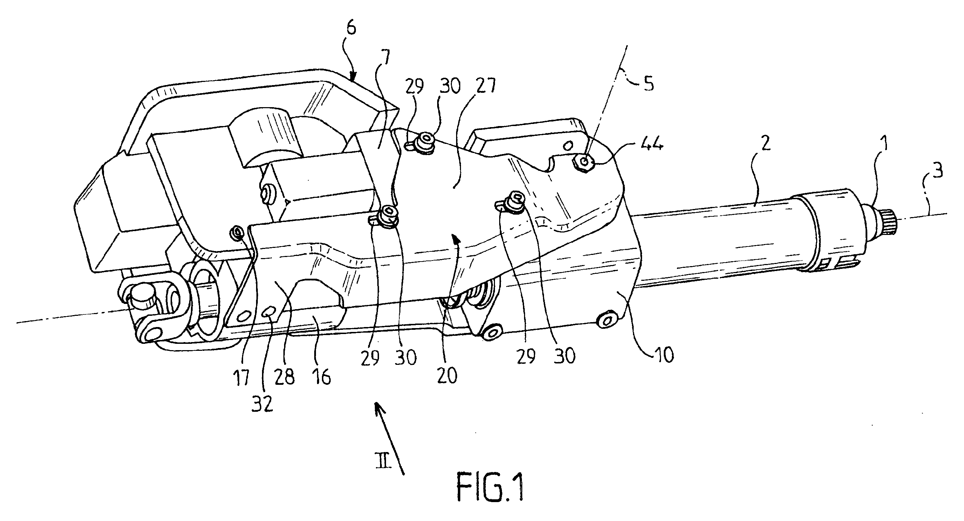

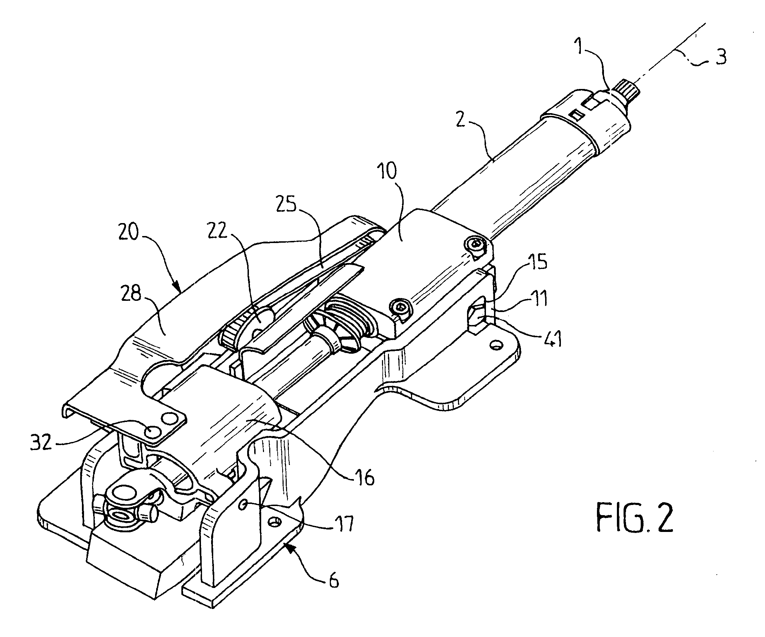

L'invention se rapporte à un dispositif de serrage d'une colonne de direction de véhicule automobile, comme cela est représenté sur les figures 1 et 2. La colonne de direction est réglable en hauteur ou en profondeur, ou elle peut être réglable en hauteur et en profondeur.

La colonne de direction comporte un arbre de direction 1, qui est monté dans un tube corps 2 de manière à pouvoir tourner autour d'un axe de direction 3. Dans la suite de la description, on appellera interne ou intérieur ce qui est situé le plus près de l'axe de direction ou d'un plan vertical 8 passant par l'axe de direction 3, et on appellera externe ou extérieur ce qui en est le plus éloigné.

Le tube corps 2 est muni d'un carré renfort 10, qui est disposé entre deux montants 11 et 12 appartenant à un ensemble support 6. L'ensemble support 6 est fixé à la structure du véhicule et les deux montants 11 et 12 sont sensiblement parallèles au plan vertical 8.

Le dispositif de serrage selon l'invention comporte :
- un actionneur électrique 7 à mouvement rotatif,
- un ensemble de transmission 9 du mouvement de rotation, et
un système de serrage 4 de la colonne de direction avec une tige de serrage 40 qui a un axe de serrage 5 sensiblement perpendiculaire au plan vertical 8.

L'actionneur électrique 7 et l'ensemble de transmission 9 sont montés sur un support de réglage 20.

Le support de réglage 20 est raccordé à l'axe de serrage 5 au moyen de la tige de serrage 40. Le support de réglage 20 est fixé à un élément intermédiaire, qui est raccordé à l'ensemble support 6. L'élément intermédiaire est constitué par un élément pivot 16, qui est disposé à l'avant du tube-corps 2. L'élément pivot 16 est agencé autour d'un axe 17 monté dans l'ensemble support 6. Ledit élément pivot 16 peut ainsi tourner autour de l'axe 17, qui est sensiblement perpendiculaire au plan vertical 8.

Le support de réglage 20 est constitué d'un élément vertical 27 et d'un élément de raccordement 28. L'élément vertical 27 et l'élément de raccordement 28 sont disposés à l'extérieur du montant 12. L'extrémité avant de l'élément de raccordement 28 est fixée sur l'élément pivot 16 au moyen de deux vis de fixation 32.

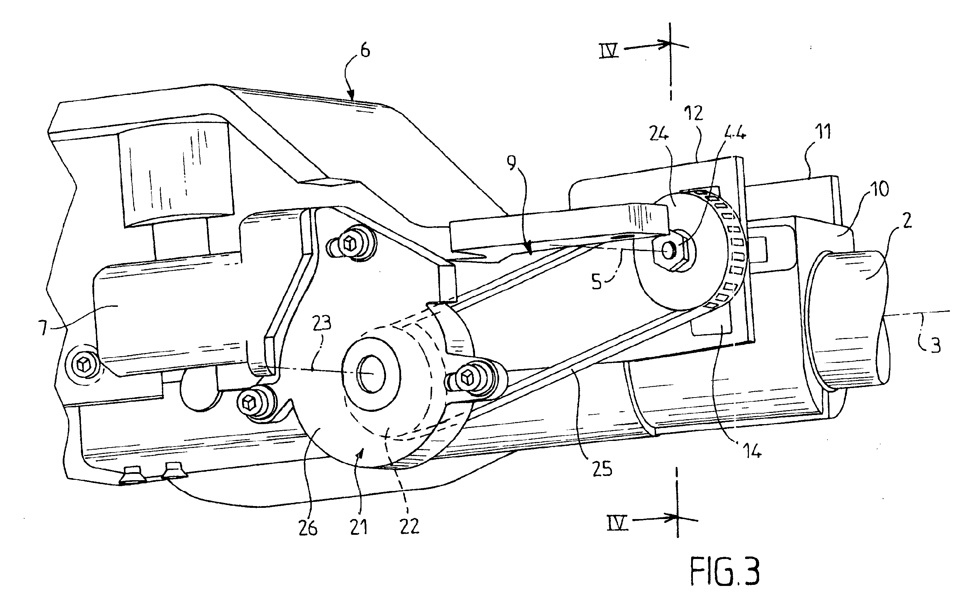

Comme cela est représenté sur les figures 1, 2 et 3, l'ensemble de transmission 9 de mouvement comprend un élément d'entrée de mouvement et un élément de sortie de mouvement. L'élément d'entrée de mouvement est raccordé à l'actionneur électrique, et l'élément de sortie de mouvement est raccordé au système de serrage 4. L'actionneur électrique est un moteur électrique 7. L'élément d'entrée de mouvement est constitué par un réducteur de vitesse 21 du type à roue et vis sans fin, la vis étant entraînée par le moteur électrique 7 et la roue entraînant une poulie de commande 22 d'axe 23.

L'élément de sortie de mouvement est constitué par une poulie de serrage 24, dont l'axe est l'axe de serrage 5. Une courroie de transmission de mouvement 25 est disposée entre la poulie de commande 22 et la poulie de serrage 24. Avantageusement, la courroie de transmission 25 est une courroie crantée, qui relie une poulie de commande 22 à crans à une poulie de serrage 24 à crans.

Le réducteur de vitesse 21 est muni d'un carter 26, qui supporte le moteur électrique 7, et qui est fixé sur l'élément vertical 27 du support de réglage 20 au moyen de trois vis de fixation 30. Chaque vis de fixation 30 est montée dans un trou oblong 29 correspondant, qui est agencé sur l'élément vertical 27. Chaque trou oblong 29 est orienté de façon à obtenir un système de réglage de la tension de la courroie de transmission 25.

L'élément pivot 16 est agencé et raccordé à l'ensemble support 6 de manière à maintenir l'entraxe à la même valeur lors du réglage de position de la colonne de direction. L'entraxe est mesuré entre l'axe 23 de l'élément d'entrée de mouvement qui est constitué par la poulie de commande 22, et l'axe de serrage 5.

Tout en restant dans le cadre de l'invention, l'ensemble de transmission pourrait être constitué par une transmission à engrenages, une transmission à câble ou une transmission à chaîne.

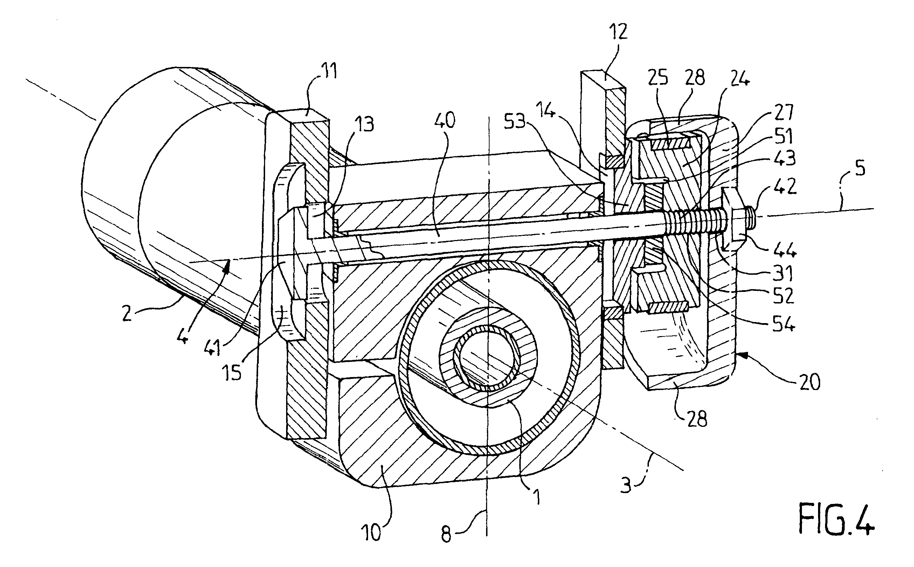

Le système de serrage 4, représenté sur la figure 4, comporte la tige de serrage 40 et un ensemble de blocage 50, qui est disposé à l'extérieur du montant 12, entre ledit montant 12 et la poulie de serrage 24. L'ensemble de blocage 50 est entraîné en rotation par ladite poulie de serrage 24, afin d'avoir la position verrouillée et la position déverrouillée de la colonne de direction.

La tige de serrage 40 traverse et coulisse dans deux trous oblongs 13 et 14 de réglage en hauteur, qui sont aménagés dans les montants correspondants 11 et 12. La tige de serrage 40 traverse également le carré renfort 10, ainsi que l'ensemble de blocage 50 et l'élément vertical 27 du support de réglage 20. La tige de serrage 40 est fixe en translation et en rotation par rapport à l'axe de serrage 5. Une des extrémités de la tige de serrage 40 est munie d'une tête de serrage 41, qui est montée dans une rainure externe 15 du montant 11 afin d'assurer l'immobilisation en rotation de la tige de serrage 40. La rainure externe 15 est orientée dans le même sens que le trou oblong 13, afin de permettre le réglage en hauteur. L'autre extrémité 42 de la tige de serrage 40 traverse un trou de passage 31 de l'élément vertical 27 du support de réglage 20. L'extrémité 42 est filetée afin de recevoir un écrou 44 de tenue axiale, qui s'appuie contre l'élément vertical 27 pour assurer l'immobilisation axiale de la tige de serrage 40.

Dans un premier mode de réalisation montré sur la figure 4, l'ensemble de blocage 50 est constitué par une portion filetée 43 qui coopère avec un trou taraudé 52. La portion filetée 43 est aménagée sur la tige de serrage 40 et le trou taraudé 52 est agencé dans la poulie de serrage 24. Une butée à aiguille ou à billes 54 est disposée entre le fond d'un logement 51 de la poulie de serrage 24 et une entretoise de serrage 53, qui s'appuie contre le montant 12. La poulie de serrage 24 en tournant dans un sens ou dans l'autre se rapproche ou s'écarte du montant 12, afin d'assurer le verrouillage ou le déverrouillage du système de serrage 4

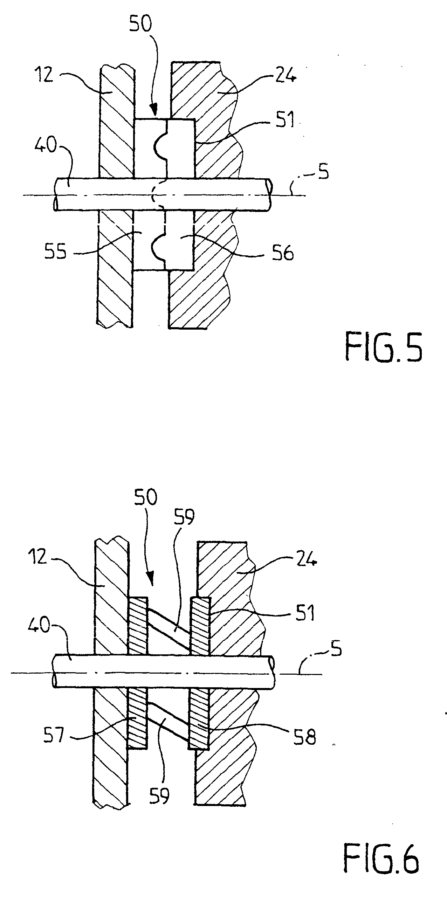

Dans un deuxième mode de réalisation représenté sur la figure 5, l'ensemble de blocage 50 comporte une came fixe 55 et une came mobile 56. La came fixe 55 est fixe en rotation et s'appuie sur le montant 12. La came mobile 56 est entraînée en rotation par la poulie de serrage 24, et s'appuie dans le fond du logement 51.

Dans un troisième mode de réalisation représenté sur la figure 6, l'ensemble de blocage 50 est un système à genouillère qui comporte une plaque fixe 57, une plaque mobile 58 et des aiguilles 59. La plaque fixe 57 est fixe en rotation et s'appuie sur le montant 12. La plaque mobile 58 est entraînée en rotation par la poulie de serrage 24 et s'appuie dans le fond du logement 51. Les aiguilles 59 sont disposées entre la plaque fixe 57 et la plaque mobile 58.

## Revendications

1. Dispositif de serrage d'une colonne de direction réglable de véhicule automobile, comportant un arbre de direction (1) monté dans un tube corps (2) et pouvant tourner autour d'un axe de direction (3), ledit tube-corps (2) étant disposé dans un ensemble support (6) fixé à la structure du véhicule, ladite colonne de direction étant réglable en hauteur et/ou en profondeur, ledit dispositif de serrage comportant :
- un actionneur électrique (7) à mouvement rotatif ;
- un ensemble de transmission (9) du mouvement de rotation ; et
- un système de serrage (4) de ladite colonne ;
**caractérisé en ce que** :
- l'actionneur électrique (7) et l'ensemble de transmission (9) sont montés sur un support de réglage (20) ;
- le support de réglage (20) est raccordé à une tige de serrage (40), qui traverse ledit support de réglage (20) et dont l'axe est l'axe de serrage (5), sensiblement perpendiculaire au plan vertical (8) passant par l'axe de direction (3) ;
- le support de réglage (20) est fixé sur un élément intermédiaire, qui est constitué par un élément pivot (16) disposé à l'avant du tube-corps (2), et agencé autour d'un axe (17) monté dans l'ensemble support (6), ledit élément pivot (16) pouvant tourner autour dudit axe (17), qui est sensiblement perpendiculaire au plan vertical (8) ;
- l'ensemble de transmission (9) ayant :
. un élément d'entrée de mouvement (21) raccordé audit actionneur électrique (7), et
. un élément de sortie de mouvement (24) raccordé audit système de serrage (4) ;
- l'élément pivot (16) étant agencé et raccordé à l'ensemble support (6) de manière à maintenir l'entraxe, entre l'élément d'entrée de mouvement (21) et l'axe de serrage (5), à la même valeur lors du réglage de position de la colonne de direction.

2. Dispositif de serrage selon la revendication 1, **caractérisé en ce que** l'actionneur électrique est un moteur électrique (7).

3. Dispositif de serrage selon l'une quelconque des revendications 1 et 2, **caractérisé en ce que** pour l'ensemble de transmission (9) :
- l'élément d'entrée de mouvement est constitué par un réducteur de vitesse (21) entraînant une poulie de commande (22) ;
- l'élément de sortie de mouvement est constitué par une poulie de serrage (24) ;
- avec une courroie de transmission de mouvement (25) entre la poulie de commande (22) et la poulie de serrage (24).

4. Dispositif de serrage selon la revendication 3, **caractérisé en ce que** l'élément d'entrée de mouvement est un réducteur (21) à roue et vis sans fin entraîné par le moteur électrique (7), la roue entraînant la poulie de commande (22).

5. Dispositif de serrage selon la revendication 3, **caractérisé en ce que** la courroie de transmission (25) est une courroie crantée, qui relie une poulie de commande (22) à crans à une poulie de serrage (24) à crans.

6. Dispositif de serrage selon la revendication 3, **caractérisé en ce qu'**il comporte un système de réglage de la tension de la courroie de transmission (25).

7. Dispositif de serrage selon la revendication 6, **caractérisé en ce que** le réducteur de vitesse (21) a un carter (26), qui reçoit trois vis de fixation (30) montées dans trois trous correspondants agencés sur le support de réglage (20), chacun de ces trois trous étant un trou oblong (29) orienté de manière à obtenir le système de réglage de la tension de la courroie de transmission (25).

8. Dispositif de serrage selon la revendication 1, **caractérisé en ce que** :
- le support de réglage (20) est constitué :
. d'un élément vertical (27) disposé à l'extérieur d'un montant (12) de l'ensemble support (6) ; et
. d'un élément de raccordement (28) fixé sur l'élément pivot (16) ;
- le système de serrage (4) comporte :
. un ensemble de blocage (50) qui est disposé entre le montant (12) et la poulie de serrage (24), et qui est entraîné en rotation par ladite poulie de serrage (24) afin d'avoir la position verrouillée et la position déverrouillée ;
. la tige de serrage (40), qui est fixe en translation et en rotation par rapport à l'axe de serrage (5), et qui traverse un trou oblong (14) de réglage en hauteur dans le montant (12), l'ensemble de blocage (50), et l'élément vertical (27) ;
. la tige de serrage (40) ayant une extrémité filetée (42) qui reçoit un écrou de tenue axiale (44) s'appuyant contre ledit élément vertical (27).

9. Dispositif de serrage selon la revendication 8, **caractérisé en ce que** l'ensemble de blocage (50) est constitué par une portion filetée (43), qui est aménagée sur la tige de serrage (40), et qui coopère avec un trou taraudé (52) agencé dans la poulie de serrage (24).

10. Dispositif de serrage selon la revendication 9, **caractérisé en ce qu'**une butée (54) à aiguilles ou à billes est disposée entre la poulie de serrage (24) et une entretoise de serrage (53) s'appuyant contre le montant (12).

11. Dispositif de serrage selon la revendication 8, **caractérisé en ce que** l'ensemble de blocage (50) comporte :
- une came fixe (55) en rotation s'appuyant sur le montant (12) ; et
- une came mobile (56) qui est entraînée en rotation par la poulie de serrage (24).

12. Dispositif de serrage selon la revendication 9, **caractérisé en ce que** l'ensemble de blocage (50) est un système à grenouillère qui comporte :
- une plaque fixe (57) en rotation s'appuyant sur le montant (12) ;
- une plaque mobile (58) qui est entraînée en rotation par la poulie de serrage (24) ; et
- des aiguilles (59) qui sont disposées entre la plaque fixe (57) et la plaque mobile (58).

13. Dispositif de serrage selon l'une quelconque des revendications 9 à 12, **caractérisé en ce que** :
- l'ensemble support (6) comporte deux montants (11 et 12) sensiblement parallèles au plan vertical (8) ;
- le tube-corps (2) est muni d'un carré renfort (10), qui est disposé entre les deux montants 11 et 12 ;
- la tige de serrage (40) traverse et coulisse dans deux trous oblongs (13 et 14) de réglage en hauteur aménagée dans les montants correspondant (11 et 12) ;
- la tige de serrage (40) traverse le carré renfort (10), et est munie d'une tête de serrage (41) qui est montée dans une rainure externe (15) du montant (11) afin d'assurer l'immobilisation en rotation.

## Claims

1. Locking device for locking an adjustable automotive vehicle steering column, including a steering shaft (1) mounted in a body-tube (2) and capable of rotation around a steering axis (3), said body-tube (2) being arranged in a support assembly (6) attached upon the vehicle chassis, said steering column being adjusted in height and/or in depth, said locking device including :
- an electric actuator (7) with rotary movement,
- a rotary movement transmission assembly (9) ; and
- a locking system (4) for said steering column ;
**characterized in that** :
- the electric actuator (7) and the transmission assembly (9) are mounted on a adjustment support (20) ;
- the adjustment support (20) is connected with a locking rod (40), which passes through said adjustment support (20) and whose axis is the locking axis (5) and which extends generally normal to the vertical plane (8) passing through the steering axis (3);
- the adjustment support (20) is attached to an intermediate element, which consists of a pivot element (16) arranged forwardly of the body-tube (2) and is arranged to pivot about an axis (17) mounted in the support assembly (6), said pivot element (16) being capable of turning around said axis (17) which extends essentially perpendicular to the vertical plane (8) ;
- the transmission assembly (9) having :
. a movement input element (21) connected with said electric actuator (7) ; and
. a movement output element (24) connected with said locking system (4) ;
- the pivot element (16) being arranged and connected to the support element (6) so as to maintain the center-to-center distance between the movement input element (21) and the locking axis (5) at the same value during the adjustment of the position of the steering column.

2. Locking device according to claim 1, **characterized in that** the electric actuator is an electric motor (7).

3. Locking device according to any one of claims 1 and 2, **characterized in that** for the transmission assembly (9) :
- the movement input element consists of a speed reducing system (21) moving a control pulley (22) ;
- the movement output element consists of a locking pulley (24) ;
- with a movement transmission belt (25) connected between the control pulley (22) and the locking pulley (24).

4. Locking device according to claim 3, **characterized in that** the movement input element is a reducing system (21) having a pinion and an endless screw and moved by the electric motor (7), the wheel moving the control pulley (22).

5. Locking device according to claim 3, **characterized in that** the transmission belt (25) is a notched belt that connects a control pulley (22) with notches to a locking pulley (24) with notches.

6. Locking device according to claim 3, **characterized in that** it comprises a system for adjusting the tension of the transmission belt (25).

7. Locking device according to claim 6, **characterized in that** the speed reducer (21) is a casing (26), which receives three attachment screws (30) mounted in three corresponding holes arranged on the adjustment support (20), each of these three holes being an oblong hole (29) oriented so as to obtain the system for adjusting the tension of the transmission belt (25.

8. Locking device according to claim 1, **characterized in that** :
- the adjustment support (20) consists of :
. a vertical element (27) arranged outside a post (12) of the support assembly (6) ; and
. a connecting element (28) attached upon the pivot element (16) ;
- the locking system (4) comprises :
. a locking assembly (50) which is arranged between the post (12) and the locking pulley (24) and which is rotationally moved by said locking pulley (24) so as to bring about the locked position and the unlocked position ;
. the locking rod (40), which is translationally and rotationally attached with respect to the locking axis (5) and which passes through an oblong hole (14) of height adjustment in the post (12), the locking assembly (50) and the vertical element (27) ;
. the locking rod (40) having a threaded end (42) that receives an axial retention screw (44) that rests against said vertical element (27).

9. Locking device according to claim 8, **characterized in that** the locking assembly (50) consists of a threaded portion (43), which is made on the locking rod (40), and which cooperates with a screw-tapped hole (52) made in the locking pulley (24).

10. Locking device according to claim 9, **characterized in that** a thrust (54) bearing with needles or balls is arranged between the locking pulley (24) and a locking brace (53) resting against the post (12).

11. Locking device according to claim 8, **characterized in that** the locking assembly (50) comprises :
- a rotationally fixed cam (55) resting on the post (12), and
- a movable cam (56) which is rotationally moved by the locking pulley (24).

12. Locking device according to claim 9, **characterized in that** the locking assembly (50) is a system with a tailpiece that comprises :
- a rotationally fixed plate (57) resting upon the wall (12) ;
- a movable plate (58) that is rotationally moved by the locking pulley (24) ; and
- needles (59) that are arranged between the fixed plate (57) and the movable plate (58).

13. Locking device according to any one of claims 9 to 12, **characterized in that** :
- the support assembly (6) comprises two posts (11 and 12) that are essentially parallel to the vertical plane (8) ;
- the body-tube (2) is equipped with a reinforcing block (10) that is disposed between the two walls (11 and 12) ;
- the locking rod (40) passes through and slides in two oblong holes (13 and 14) of height adjustment made in the corresponding posts (11 and 12) ;
- the locking rod (40) passes through the reinforcing block (10) and is equipped with a locking head (41), which is mounted in an external groove (15) of the corresponding post (11) so as to ensure rotationally immobilization.

## Patentansprüche

1. Vorrichtung zum Festklemmen einer einstellbaren Kraftfahrzeuglenksäule, eine Lenkwelle (1) umfassend, die in einem Rohrkörper (2) montiert ist und sich um eine Lenkachse (3) drehen kann, wobei der genannte Rohrkörper (2) in einem Trägerteil (6) angeordnet ist, das an der Karosserie des Fahrzeugs befestigt ist, wobei die genannte Lenksäule in Höhe und/oder Tiefe einstellbar ist, wobei die genannte Klemmvorrichtung umfasst:
- ein drehbewegliches elektrisches Betätigungsteil (7),
- eine Getriebeanordnung (9) zur Übertragung der Drehbewegung, und
- ein System zum Festklemmen (4) der genannten Lenksäule,
**dadurch gekennzeichnet, dass**:
- das elektrische Betätigungsteil (7) und die Getriebeanordnung (9) auf einer Einstellhalterung (20) angebracht sind,
- die Einstellhalterung (20) mit einer Klemmspindel (40) verbunden ist, die die genannte Einstellhalterung (20) durchquert und deren Achse die Klemmachse (5) ist, die im Wesentlichen rechtwinklig zu der vertikalen Ebene (8) verläuft, die die Lenkachse (3) enthält,
- die Einstellhalterung (20) an einem Zwischenstück befestigt ist, das aus einem Kippelement (16) besteht, das vorne am Rohrkörper (2) angeordnet und um eine Achse (17) montiert ist, die im Trägerteil (6) angebracht ist, wobei sich das genannte Kippelement (16) um die genannte Achse (17) drehen kann, die auf der vertikalen Ebene (8) im Wesentlichen senkrecht steht,
- wobei die Getriebeanordnung (9) aufweist:
· ein Bewegungseintrittselement (21), dass mit dem genannten elektrischen Betätigungsteil (7) verbunden ist, und
ein Bewegungsausgangselement (24), das mit dem genannten Klemmsystem (4) verbunden ist,
- wobei das Kippelement (16) derart angeordnet und mit dem Trägerteil (6) verbunden ist, dass der Achsenabstand zwischen dem Bewegungseintrittselement (21) und der Klemmachse (5) während der Einstellung der Stellung der Lenksäule auf demselben Wert gehalten wird.

2. Klemmvorrichtung nach Patentanspruch 1, **dadurch gekennzeichnet, dass** das elektrische Betätigungsteil ein Elektromotor (7) ist.

3. Klemmvorrichtung nach irgendeinem der Patentansprüche 1 und 2, **dadurch gekennzeichnet, dass** in der Getriebeanordnung (9)
- das Bewegungseintrittselement aus einem Drehzahlmindergetriebe (21) besteht, das eine Antriebsscheibe (22) antreibt,
- das Bewegungsausgangselement aus einer Klemmscheibe (24) besteht,
- mit einem Bewegungsübertragungsriemen (25) zwischen der Antriebsscheibe (22) und der Klemmscheibe (24).

4. Klemmvorrichtung nach Patentanspruch 3, **dadurch gekennzeichnet, dass** das Bewegungseintrittselement ein Drehzahlmindergetriebe (21) aus Rad und Endlosschraube ist, die vom Elektromotor (7) angetrieben wird, wobei das Rad die Antriebsscheibe (22) antreibt.

5. Klemmvorrichtung nach Patentanspruch 3, **dadurch gekennzeichnet, dass** der Treibriemen (25) ein formgezahnter Riemen ist, der eine Antriebsscheibe (22) mit Kerben mit einer Klemmscheibe (24) mit Kerben verbindet.

6. Klemmvorrichtung nach Patentanspruch 3, **dadurch gekennzeichnet, dass** sie ein System zur Einstellung der Spannung des Treibriemens (25) aufweist.

7. Klemmvorrichtung nach Patentanspruch 6, **dadurch gekennzeichnet, dass** das Drehzahlmindergetriebe (21) über ein Gehäuse (26) verfügt, das drei Befestigungsschrauben (30) aufnimmt, die in drei entsprechenden Löchern montiert sind, die in der Einstellhalterung (20) ausgebildet sind, wobei jedes dieser drei Löcher ein Langloch (29) ist, das derart gerichtet ist, dass das System zur Einstellung der Spannung des Treibriemens (25) erhalten wird.

8. Klemmvorrichtung nach Patentanspruch 1, **dadurch gekennzeichnet, dass**
- die Einstellhalterung (20) besteht aus:
- einem vertikalen Teil (27), das außerhalb einer Strebe (12) des Trägerteils (6) angeordnet ist, und
- einem Verbindungsteil (28), das am Kippelement (16) befestigt ist,
- das Klemmsystem (4) besteht aus:
· einer Sperranordnung (50), die zwischen der Strebe (12) und der Klemmscheibe (24) angeordnet ist, die durch die genannte Klemmscheibe (24) zu Drehungen angetrieben wird, um die verriegelte und die entriegelte Stellung zu erhalten,
· der Klemmspindel (40), die gegen Verschiebungen und Drehungen relativ zur Klemmachse (5) fest ist und ein Langloch (14) zur Höheneinstellung in der Strebe (12), die Sperranordnung (50) und das vertikale Teil (27) durchquert,
· wobei die Klemmspindel (40) über ein gewindetes Ende (42) verfügt, das eine Mutter (44) zum Halten in Achsenrichtung aufnimmt, die gegen das vertikale Teil (27) drückt.

9. Klemmvorrichtung nach Patentanspruch 8, **dadurch gekennzeichnet, dass** die Sperranordnung (50) aus einem gewindeten Teil (43) besteht, der auf der Klemmspindel (40) ausgebildet ist, und der mit einem innengewindeten Loch (52) zusammenarbeitet, das in der Klemmscheibe (24) ausgebildet ist.

10. Klemmvorrichtung nach Patentanspruch 9, **dadurch gekennzeichnet, dass** ein Anschlag (54) mit Nadeln oder Kugeln zwischen der Klemmscheibe (24) und einem Klemmanker (53) angeordnet ist, der auf die Strebe (12) drückt.

11. Klemmvorrichtung nach Patentanspruch 8, **dadurch gekennzeichnet, dass** die Sperranordnung (50) umfasst:
- einen drehfesten Nocken (55), der auf die Strebe (12) drückt, und
- einen beweglichen Nocken (56), der durch die Klemmscheibe (24) zu Drehungen angetrieben wird.

12. Klemmvorrichtung nach Patentanspruch 9, **dadurch gekennzeichnet, dass** die Sperranordnung (50) ein Schnallenverschlusssystem ist, umfassend
- eine drehfeste Platte (57), die auf die Strebe (12) drückt,
- eine bewegliche Platte (58), die durch die Klemmscheibe (24) zu Drehungen angetrieben wird, und
- Nadeln (59), die zwischen der festen Platte (57) und der beweglichen Platte (58) angeordnet sind.

13. Klemmvorrichtung nach irgendeinem der Patentansprüche 9 bis 12, **dadurch gekennzeichnet, dass**
- das Trägerteil (6) zwei Streben (11 und 12) im Wesentlichen parallel zur vertikalen Ebene (8) aufweist,
- der Rohrkörper (2) mit einem Verstärkungsvierkant (10) versehen ist, der zwischen den beiden Streben 11 und 12 angeordnet ist,
- die Klemmspindel (40) zwei Langlöcher (13 und 14) zur Höheneinstellung durchquert und darin gleitet, die in den entsprechenden Streben (11 und 12) ausgebildet sind,
- die Klemmspindel (40) den Verstärkungsvierkant (10) durchquert und mit einem Spannkopf (41) versehen ist, der in einer äußeren Rille (15) der Strebe (11) angeordnet ist, um das Festsetzen gegen Drehungen sicherzustellen.
